# EUROPEAN PATENT APPLICATION

(11) **EP 4 349 433 A1**
(43) Date of publication of application: **10.04.2024**
(21) Application number: 22810903.9
(22) Date of filing: 04.03.2022
(51) Int. Cl.: A63F 13/52, A63F 13/525, G06T 19/00

(54) **PROGRAM, METHOD, AND INFORMATION PROCESSING DEVICE**

(30) Priority: 24.05.2021 JP 2021087226
(71) Applicant: COLOPL, INC., Tokyo 107-0052 (JP)
(72) Inventor: SAWAKI, Kazuaki, Tokyo 107-0052 (JP)
(74) Representative: Gille Hrabal Partnerschaftsgesellschaft mbB Patentanwälte
(86) International application number: PCT/JP2022/009280
(87) International publication number: WO 2022/249622

(57) **Abstract**

Provided is a program executed by a first computer comprising a processor and a memory. The program causes the processor to execute a step for generating a virtual space 501, a step for disposing a virtual camera and a user object 502 in the virtual space 501, a step for generating a virtual space image on the basis of the virtual camera, and a step for moving the user object 502 on the basis of a movement operation being performed. In the step for generating the virtual space image, when the movement operation is not being performed, the position of the virtual camera is controlled such that the virtual space image is an image of a first-person view of the user object 502, and when the movement operation is being performed, the position of the virtual camera is controlled such that the virtual space image is an image of a third-person view.

## Description

### TECHNICAL FIELD

The present disclosure relates to a program, a method, and an information processing apparatus.

### BACKGROUND ART

There is known a technique of moving a user object in a virtual space based on an operation input of a user and generating a virtual space image based on a virtual camera which moves according to the movement of the user object. Non-Patent Document 1 discloses a game which generates such a virtual space image from a first-person viewpoint which is the viewpoint of the user object. In addition, Non-Patent Document 2 discloses a game which generates a virtual space image including the user object from a third-person viewpoint.

### PRIOR ART DOCUMENTS

### NON-PATENT DOCUMENTS

Non-Patent Document 1: "Explanations of points that people starting to play 'Apex Legends' should know. It's not too late to embark on the path to becoming a champion even now!", [online], [searched on May 19, 2021], Internet <https://www.famitsu.com/news/202101/09212564.html>
Non-Patent Document 2: "Fortnite Chapter 2 - Season 6 Battle Pass Trailer", [online], [searched on May 19, 2021], Internet https://www.epicgames.com/fortnite/ja/battle-pass/zero-point

### SUMMARY OF INVENTION

### TECHNICAL PROBLEM

In the case of adopting the first-person viewpoint as in Non-Patent Document 1, a feeling of immersion in the virtual space can be improved, but the user tends to easily suffer from visually-induced motion sickness. On the other hand, in the case of adopting the third-person viewpoint as in Non-Patent Document 2, although the visually-induced motion sickness is less likely to occur, there may be a situation in which the feeling of immersion in the virtual space decreases, or the visibility in the virtual space decreases since another object is hidden by the user object.

An object of the present disclosure is to prevent visually-induced motion sickness and to suppress a feeling of immersion in a virtual space and a decrease in visibility in the virtual space.

### SOLUTION TO PROBLEM

According to an aspect of an embodiment illustrated in the present disclosure, there is provided a program that is executed by a first computer including a processor and a memory, the program causing the processor to perform operations comprising: generating a virtual space; arranging a virtual camera and a user object in the virtual space; generating, based on the virtual camera, a virtual space image, the virtual space image being an image obtained by capturing an image of inside of the virtual space from the virtual camera; and moving the user object in the virtual space based on a movement operation for moving the user object having been performed, wherein in the generating of the virtual space image, when the movement operation is not being performed, a position of the virtual camera is controlled such that the virtual space image is an image from a first-person viewpoint of the user object, and when the movement operation is being performed, the position of the virtual camera is controlled such that the virtual space image is an image from a third-person viewpoint including at least a part of the user object.

### ADVANTAGEOUS EFFECTS OF INVENTION

According to an aspect of an embodiment illustrated in the present disclosure, the present invention makes it possible to prevent visually-induced motion sickness and to suppress a feeling of immersion in a virtual space and a decrease in visibility in the virtual space.

### BRIEF DESCRIPTION OF THE DRAWINGS

Fig. 1 is a diagram illustrating a configuration example of a system according to an embodiment.
Fig. 2 is a block diagram illustrating a functional configuration of a user terminal according to an embodiment.
Fig. 3 is a block diagram illustrating a functional configuration of a server according to an embodiment.
Fig. 4 is a flowchart illustrating an example of processing regarding provision of a virtual space according to an embodiment.
Fig. 5 is a schematic diagram illustrating an example of the virtual space according to an embodiment.
Fig. 6 is a schematic diagram illustrating an example of a display screen according to an embodiment.
Fig. 7 is a flowchart illustrating an example of change processing to a third-person viewpoint according to an embodiment.
Fig. 8 is a schematic diagram illustrating a positional relationship between a user object and a virtual camera according to an embodiment.
Fig. 9 is a schematic diagram illustrating the positional relationship between the user object and the virtual camera according to an embodiment.
Fig. 10 is a flowchart illustrating an example of change processing to a first-person viewpoint according to an embodiment.
Fig. 11 is a schematic diagram illustrating an example of the display screen according to an embodiment.
Fig. 12 is a flowchart illustrating an example of processing regarding video play according to an embodiment.
Fig. 13 is a schematic diagram illustrating an example of the virtual space according to an embodiment.
Fig. 14 is a schematic diagram illustrating an example of the display screen according to an embodiment.
Fig. 15 is a schematic diagram illustrating an example of the display screen when a video according to an embodiment is displayed on a full screen.

### DESCRIPTION OF EXEMPLARY EMBODIMENTS

Hereinafter, embodiments of this technical idea will be described in detail with reference to the drawings. In the following description, the same components or the like are denoted by the same reference numerals. The names and functions thereof are the same. Therefore, detailed descriptions thereof will not be repeated. In one or more embodiments shown in the present disclosure, the elements included in the embodiments can be combined with each other, and the combined result also forms a part of the embodiments shown in the present disclosure.

### (Configuration of System)

Hereinafter, as an embodiment according to the present disclosure, a system which moves a user object in a virtual space based on an operation input of a user and provides the user with a virtual space image generated based on a virtual camera which moves according to the movement of the user object will be described as an example.

The virtual space may be common to a plurality of users or may be different for each of the plurality of users. That is, a plurality of user objects may exist in one virtual space, or one user object may exist in one virtual space. In addition, the virtual space may be generated by using an XR technology such as virtual reality (VR).

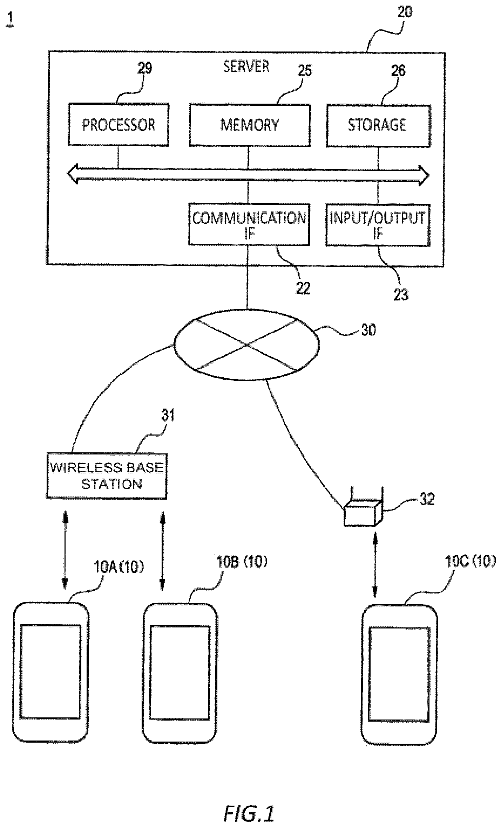

Fig. 1 is a diagram illustrating a configuration example of a system 1 according to an embodiment. As illustrated in Fig. 1, the system 1 includes user terminals 10A, 10B, and 10C respectively used by the plurality of users, and a server 20, and these devices are connected to be able to communicate with each other by a network 30.

The user terminal 10A and user terminal 10B are connected to the network 30 by communicating with a wireless base station 31. The user terminal 10C is connected to the network 30 by communicating with a wireless router 32 installed in a facility such as a house. Hereinafter, the user terminals such as the user terminals 10A, 10B, and 10C are also collectively referred to as "user terminal(s) 10".

The user terminal 10 is a computer (information processing apparatus) used by the user. The user terminal 10 may be a portable information terminal or may be an installation type information terminal. The user terminal 10 may or may not include a touch screen. In addition, the user terminal 10 may be a head-mounted device (HMD). Hereinafter, it is assumed that the user terminal 10 is a portable terminal including a touch screen, specifically, a smartphone, a phablet, a tablet, or the like.

The user terminal 10 executes, for example, an application program installed via a platform that distributes an application or the like, or a program including preinstalled website browsing software or the like. The user terminal 10 can generate a virtual space image by executing the program and output the virtual space image to a display unit. In generating the virtual space image, the user terminal 10 can transmit and receive various types of data to and from the server 20 as necessary.

The server 20 appropriately transmits, to the user terminal 10, data necessary for generating the virtual space image. The server 20 manages various types of data regarding the user. For example, the server 20 receives information regarding the operation input of the user from the user terminal 10, and executes processing according to the received information.

The server 20 includes, as a hardware configuration, a communication interface (IF) 22, an input/output IF 23, a memory 25, a storage 26, and a processor 29, which are connected to each other via a communication bus.

The communication IF 22 is compatible with various communication standards such as a local area network (LAN) standard, and functions as an interface for transmitting and receiving data to and from external communication equipment such as the user terminal 10.

The input/output IF 23 receives the input of information to the server 20 and functions as an interface for outputting information to the outside of the server 20. The input/output IF 23 includes an input receiving unit which receives connection of information input equipment such as a mouse or a keyboard, and an output unit which receives connection of information output equipment such as a display for displaying an image or the like.

The memory 25 is a storage device for storing data and the like used for processing in the server 20. For example, the memory 25 provides the processor 29 with a work region to be used temporarily when the processor 29 performs processing. The memory 25 includes a storage device such as a read only memory (ROM) and a random access memory (RAM).

The storage 26 is a storage device for storing various programs and various types of data to be read and executed by the processor 29. The storage 26 includes a storage device such as a hard disk drive (HDD) or a flash memory.

The processor 29 controls the operation of the server 20 by reading and executing the program stored in the storage 26. The processor 29 includes, for example, a central processing unit (CPU), a micro processing unit (MPU), a graphics processing unit (GPU), and the like.

### (Configuration of User Terminal)

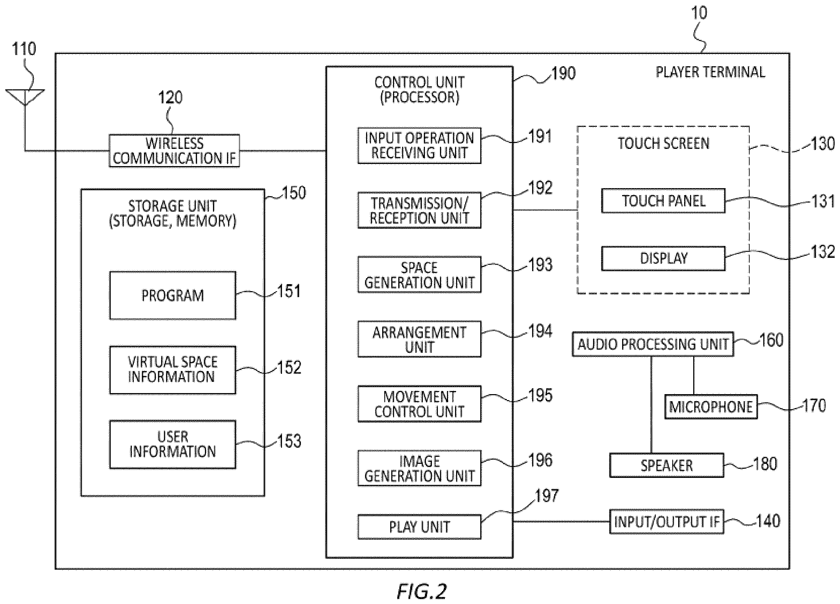

Fig. 2 is a block diagram illustrating a functional configuration of the user terminal 10. As illustrated in Fig. 2, the user terminal 10 includes an antenna 110, a wireless communication IF 120, a touch screen 130, an input/output IF 140, a storage unit 150, an audio processing unit 160, a microphone 170, a speaker 180, and a control unit 190.

The antenna 110 radiates, as a radio wave, a signal emitted from the user terminal 10 into space. In addition, the antenna 110 receives a radio wave from the space and provides a reception signal to the wireless communication IF 120.

The wireless communication IF 120 performs modulation/demodulation processing or the like for transmitting and receiving signals via the antenna 110 or the like in order for the user terminal 10 to communicate with other communication equipment. The wireless communication IF 120 is a communication module for wireless communication including a tuner, a high frequency circuit, and the like, and performs modulation/demodulation or frequency conversion of a wireless signal to be transmitted and received by the user terminal 10, and gives a reception signal to the control unit 190.

The touch screen 130 receives an input from the user and outputs information to the user on the display 132. The touch screen 130 includes a touch panel 131 for receiving the input operation of the user and a display 132 for displaying a menu screen, a virtual space image, or the like on the screen. The touch panel 131 can detect the approach of the user's finger or the like by using, for example, a capacitive method. The display 132 is realized by, for example, a liquid crystal display (LCD), an organic electroluminescence (EL), or another display apparatus.

The input/output IF 140 receives the input of information to the user terminal 10 and functions as an interface for outputting information to the outside of the user terminal 10.

The storage unit 150 includes a flash memory, a RAM, and the like. The storage unit 150 can store various types of data received by the user terminal 10 from the server 20. The storage unit 150 stores a program 151 which can provide a virtual space image to the user, a virtual space information 152, and a user information 153.

The virtual space information 152 includes, for example, information for generating a virtual space. In addition, the virtual space information 152 includes, for example, information for generating various virtual objects such as a virtual camera and a user object arranged in the virtual space. In addition, the virtual space information 152 includes, for example, arrangement information for arranging various virtual objects in the virtual space. The user information 153 includes, for example, a terminal identification (ID) for identifying the user terminal 10, user ID information for identifying the user, and the like.

The audio processing unit 160 modulates and demodulates an audio signal. The audio processing unit 160 modulates the signal provided from the microphone 170 and provides the modulated signal to the control unit 190. In addition, the audio processing unit 160 provides an audio signal to the speaker 180. The audio processing unit 160 is realized by, for example, a processor for audio processing. The microphone 170 functions as an audio input unit for receiving the input of an audio signal and outputting the audio signal to the control unit 190. The speaker 180 functions as an audio output unit for outputting an audio signal to the outside of the user terminal 10.

The control unit 190 controls the operation of the user terminal 10 by reading and executing the program stored in the storage unit 150. The control unit 190 is realized by, for example, an application processor.

By reading and executing the program 151, the control unit 190 exerts functions of an input operation receiving unit 191, a transmission/reception unit 192, a space generation unit 193, an arrangement unit 194, a movement control unit 195, an image generation unit 196, and a play unit 197. In one aspect, the control unit 190 generates a virtual space image while transmitting and receiving various types of information to and from the server 20.

The input operation receiving unit 191 receives the input operation of the user based on the output of the touch screen 130. Specifically, the input operation receiving unit 191 detects the approach of the user's finger or the like to the touch panel 131 as coordinates of a coordinate system including a horizontal axis and a vertical axis of a surface constituting the touch screen 130.

The input operation receiving unit 191 discerns the operation of the user on the touch screen 130. Specifically, the input operation receiving unit 191 discerns the operations of the user such as so-called "approach operation", "release operation", "tap operation", "double tap operation", "long press operation (long touch operation)", "drag operation (swipe operation)", "move operation", and "flick operation". The operations of the user discerned by the input operation receiving unit 191 are not limited to the above. For example, when the touch panel 131 has a mechanism capable of detecting the magnitude of a pressure applied by the user on the touch panel 131, the input operation receiving unit 191 discerns the magnitude of the pressure applied by the user.

The transmission/reception unit 192 receives various types of information from the server 20 and transmits various types of information to the server 20. The transmission/reception unit 192 receives, for example, at least a part of virtual space information 252 from the server 20. As an example, the transmission/reception unit 192 receives, from the server 20, other user object information regarding another user object operated by another user. The transmission/reception unit 192 transmits, for example, information regarding movement of the user object and other actions to the server 20.

The space generation unit 193 refers to the virtual space information 152 and generates a virtual space. In addition, the space generation unit 193 generates a virtual object such as a virtual camera and a user object arranged in the virtual space. The virtual object generated by the space generation unit 193 can include another user object operated by another user and a screen object as a video play region for displaying a video.

The arrangement unit 194 arranges various virtual objects such as a virtual camera and a user object in the virtual space with reference to the arrangement information included in the virtual space information 152. For example, the arrangement unit 194 arranges other user objects in the virtual space based on other user object information. In addition, when the arrangement unit 194 arranges the screen object in the virtual space, a trigger region for starting playing a video on the screen object can be set in the virtual space. In addition, the arrangement unit 194 can move another user object or another virtual object based on the information or the like transmitted from the server 20.

The movement control unit 195 moves the user object in the virtual space based on a movement operation for moving the user object having been performed (hereinafter, also simply referred to as a "movement operation"). The movement control unit 195 interprets the instruction contents of the user based on, for example, the coordinates of the input position of the input operation received by the input operation receiving unit 191 and the type of operation, and moves the user object based on the interpretation.

The image generation unit 196 generates, based on the virtual camera, a virtual space image, the virtual space image being an image obtained by capturing an image of the inside of the virtual space from the virtual camera. The virtual space image generated by the image generation unit 196 is output to the touch screen 130 and displayed on the display 132.

When the movement operation is not being performed, the position of the virtual camera is controlled such that the virtual space image is an image from the first-person viewpoint of the user object. Thus, when the movement operation is not being performed, the virtual space image generated by the image generation unit 196 is an image from the first-person viewpoint of the user object. Here, the "first-person viewpoint" is a viewpoint for the user to be in the position of the user object, and is, for example, a viewpoint from a position of the viewpoint of the user object or the vicinity of the position. The image from the first-person viewpoint may include, for example, a part (for example, an arm, a foot, or the like) of the body excluding the head of the user object, the belongings of the user object, and the like.

On the other hand, when the movement operation is being performed, the position of the virtual camera is controlled such that the virtual space image is an image from a third-person viewpoint including at least a part of the user object. Thus, when the movement operation is being performed, the virtual space image generated by the image generation unit 196 is an image from the third-person viewpoint of the user object. Here, the "third-person viewpoint" is a viewpoint at a position away from the user object. In the third-person viewpoint, a position which allows at least the head of the user object to be included in the field of view is preferably set as a viewpoint. When the user object is riding on another virtual object such as a car, the head of the user object may not be included in the image from the third-person viewpoint.

When the movement operation is not being performed, the image generation unit 196 preferably generates the virtual space image, with at least a part of the user object being hidden. That is, when the movement operation is not being performed, it is preferable to generate the virtual space image after performing transparency processing of making a part or the whole of the user object transparent or translucent. When a part of the user object is transparent or translucent, the remaining part may be non-transparent. In addition, transparency may be different depending on the part of the user object. Note that the user object when the transparency processing is not performed may be non-transparent.

As described above, the virtual space image generated by the image generation unit 196 is changed from the image from the first-person viewpoint to the image from the third-person viewpoint when the movement operation has been started, and is changed from the image from the third-person viewpoint to the image from the first-person viewpoint when the movement operation is ended. It is preferable that the image generation unit 196 perform processing for reducing discomfort, so that the user is less likely to feel discomfort at the time of such viewpoint change.

As the processing for reducing discomfort, for example, when the movement operation of moving the user object in a direction in which the virtual camera faces has been started, the image generation unit 196 may perform processing of generating the virtual space image through moving the user object and not moving the virtual camera until a distance between the user object and the virtual camera reaches a predetermined first distance, and generating the virtual space image through moving the virtual camera in conjunction with the movement of the user object after the distance between the user object and the virtual camera reaches the first distance.

Here, the "direction in which the virtual camera faces" is, for example, a far-side direction toward the far side of the virtual space with reference to the virtual space image displayed on the display 132. In addition, the "first distance" is not particularly limited, but is preferably, for example, a distance between the position of the virtual camera in the case of the first-person viewpoint and the position of the virtual camera in the case of the third-person viewpoint.

In addition, as the processing for reducing discomfort, for example, when the movement operation of moving the user object in an opposite direction to the direction in which the virtual camera faces has been started, the image generation unit 196 may perform processing of generating the virtual space image through moving the user object and moving, toward the opposite direction, the virtual camera at a moving speed faster than the moving speed of the user object until the distance between the user object and the virtual camera reaches a predetermined second distance, and generating the virtual space image through moving the user object based on the movement operation and moving the virtual camera at the same moving speed as the moving speed of the user object in conjunction with the movement of the user object after the distance between the user object and the virtual camera reaches the second distance.

Here, the "opposite direction to the direction in which the virtual camera faces" is, for example, a near-side direction toward the near side of the virtual space with reference to the virtual space image displayed on the display 132. In addition, the "second distance" is not particularly limited, but is preferably, for example, a distance between the position of the virtual camera in the case of the first-person viewpoint and the position of the virtual camera in the case of the third-person viewpoint. The second distance may be the same as or different from the first distance.

When the movement operation for moving the user object in a straightly lateral direction has been started, basically, processing similar to that in the case of the movement operation in the near-side direction may be performed. Specifically, the processing may be performed in which the virtual camera follows the movement of the user object in the lateral direction while moving in the near-side direction, and after the distance between the virtual camera and the user object reaches the predetermined second distance, the virtual space image is generated through moving the user object based on the movement operation and moving the virtual camera in the same direction as the moving direction of the user object at the same moving speed as the moving speed of the user object in conjunction with the movement of the user object.

In addition, in order to generate the virtual space image, the image generation unit 196 may perform, as the processing for reducing discomfort, fade-in processing from the transparent state to the non-transparent state on the user object until a predetermined time (for example, about one second) has elapsed since the start of movement of the user object. That is, when changing from the first-person viewpoint to the third-person viewpoint, the processing may be performed such that the user object gradually appears while lowering the transparency from the transparent state. Note that the fade-in processing may be processing of changing from the transparent state to the translucent state or from the translucent state to the non-transparent state.

In addition, in order to generate the virtual space image, the image generation unit 196 may perform, as the processing for reducing discomfort, fade-out processing from the non-transparent state to the transparent state on the user object until a predetermined time (for example, about one second) has elapsed since the end of movement of the user object. That is, when changing from the third-person viewpoint to the first-person viewpoint, the processing may be performed such that the user object is made gradually invisible while continuously increasing the transparency from the non-transparent state. Note that the fade-out processing may be processing of changing from the non-transparent state to the translucent state or from the translucent state to the transparent state.

In addition, as the processing for reducing discomfort, the image generation unit 196 may execute processing of decreasing the visibility of the virtual space image until a predetermined time has elapsed since the start of the movement operation. The processing of decreasing the visibility is not particularly limited, and examples thereof include fade to black processing, blur processing, and the like. The image generation unit 196 may perform processing similar to that described above until a predetermined time has elapsed since the end of the movement operation.

For example, when the user object is positioned in the trigger region arranged in the virtual space, the play unit 197 plays the video in the video play region. In addition, for example, when an operation of selecting the video play region is performed, the play unit 197 plays the video in full screen display. Note that the play unit 197 may be configured to be able to play a video according to an input operation for playing the video regardless of the trigger region.

### (Configuration of Server)

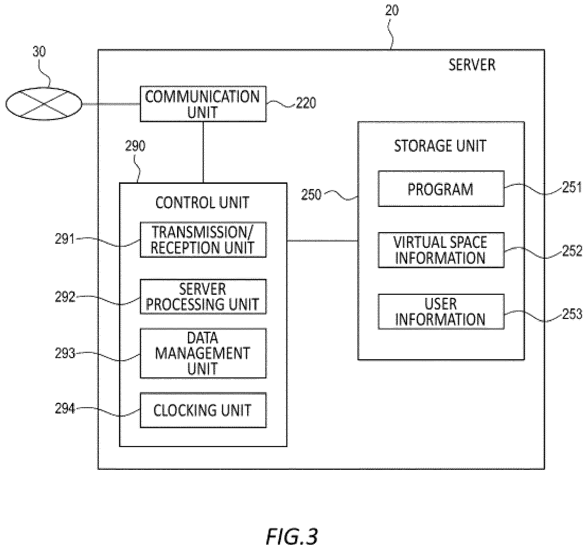

Fig. 3 is a block diagram illustrating a functional configuration of the server 20. A detailed configuration of the server 20 will be described with reference to Fig. 3. The server 20 exerts functions as a communication unit 220, a storage unit 250, and a control unit 290 by operating in accordance with a program 251.

The communication unit 220 functions as an interface for the server 20 to communicate with external communication equipment such as the user terminal 10 via the network 30.

The storage unit 250 stores various programs and various types of data for operating the server 20. In one aspect, the storage unit 250 stores the program 251, the virtual space information 252, and user information 253.

The program 251 is a program for providing the virtual space image to the user via the user terminal 10. The program 251 executes various types of processing on the server 20 side for providing the virtual space image to the user with reference to, for example, the virtual space information 252, the user information 253, and the like.

The virtual space information 252 includes, for example, information for generating the virtual space and information for generating various virtual objects arranged in the virtual space. At least a part of the virtual space information 252 may be information on which the virtual space information 152 is based. The virtual space information 252 can include information regarding the position and action of each user object in the virtual space. In addition, the virtual space information 252 may include information regarding a video.

The user information 253 is information regarding each user of each user terminal 10. The user information 253 includes, for example, information for identifying the user terminal 10 or the user of the user terminal 10 and other information.

The control unit 290 exerts functions as a transmission/reception unit 291, a server processing unit 292, a data management unit 293, and a clocking unit 294 by executing the program 251 stored in the storage unit 250.

The transmission/reception unit 291 receives various types of information from the user terminal 10 and transmits various types of information to the user terminal 10. The user terminal 10 and the server 20 transmit and receive, for example, information regarding the generation of the virtual space or the virtual object, information regarding the movement or other actions of the user object, information regarding the play of the video, and the like.

The server processing unit 292 performs various types of processing necessary in the server 20 in order to provide the virtual space to the user via the user terminal 10. The server processing unit 292 instructs the transmission/reception unit 291 to transmit various types of data in response to various requests from the user terminal 10 received by the transmission/reception unit 291. In addition, the server processing unit 292 instructs the data management unit 293 to update various types of data based on various calculation results by the server processing unit 292.

The data management unit 293 performs processing of adding/deleting/updating various types of data stored in the storage unit 250 based on the instruction from the server processing unit 292. The clocking unit 294 performs processing of measuring time. In addition, the clocking unit 294 executes, for example, processing of synchronizing various types of information regarding time in a plurality of user terminals 10.

### (Operation Example of Program)

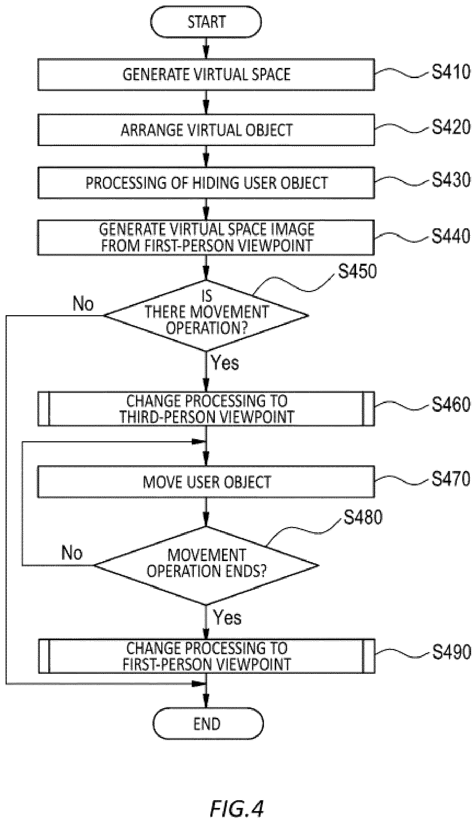

Next, an operation example in a program according to an embodiment of the present disclosure will be described with reference to Figs. 4 to 15. Each processing described below is realized by the control unit 190 executing the program 151 and the control unit 290 executing the program 251. Note that the processing configuring each flowchart described in the present specification may be performed in any order within a range where no contradiction or inconsistency occurs in the processing contents, and may be executed in parallel. In addition, a part of the processing configuring each flowchart described in the present specification may be omitted.

Fig. 4 is a flowchart illustrating an example of processing regarding provision of a virtual space according to an embodiment. First, in step S410, the control unit 190 generates a virtual space with reference to the virtual space information 152. Similarly, the control unit 190 generates the virtual object including a virtual camera, a user object, and the like. In the generation of the virtual space and the virtual object, the control unit 190 may receive various types of information such as the virtual space information 252 from the server 20 as necessary.

In step S420, the control unit 190 arranges the virtual object in the virtual space with reference to the arrangement information included in the virtual space information 152. The initial position of the virtual camera is, for example, the viewpoint position of the user object.

In step S430, the control unit 190 performs processing of hiding at least a part of the user object. In step S430, for example, transparency processing is executed which increases transparency of a part or the whole of the user object to make the user object transparent.

In step S440, the control unit 190 generates the virtual space image from the first-person viewpoint. For example, the control unit 190 causes the virtual space image to be displayed on the display 132. The virtual space image is an image based on the virtual camera, and is an image obtained by capturing an image of the inside of the virtual space from the virtual camera. The orientation of the virtual camera can be changed based on the input operation performed by the user to change the orientation of the virtual camera. In addition, the position of the virtual camera can be changed according to the movement of the user object.

When the control unit 190 does not detect the movement operation by the user (No in step S440), the first-person viewpoint is maintained, and a series of processing is ended in response to reception of an input operation for ending the program 151, or the like.

On the other hand, when the control unit 190 detects the movement operation by the user (Yes in step S450), the control unit 190 performs change processing to the third-person viewpoint in step S460. The processing of step S460 will be described in detail in a subsequent paragraph. Note that, when the control unit 190 detects the movement operation by the user, information for specifying the position of the user object after the movement can be transmitted to the server 20 as necessary.

In step S470, the control unit 190 moves the user object. In addition, in step S470, the control unit 190 moves the virtual camera at the same moving speed as that of the user object in conjunction with the movement of the user object. That is, in step S470, the user object and the virtual camera move while maintaining a relative positional relationship.

When the control unit 190 does not detect the end of the movement operation (No in step S480), the process returns to step S470, and the processing of moving the user object and the virtual camera is continued.

On the other hand, when the control unit 190 detects the end of the movement operation by the user (Yes in step S480), in step S490, the control unit 190 performs change processing to the first-person viewpoint, and ends the series of processing in response to reception of the input operation for ending the program 151, or the like. The processing of step S490 will be described in detail in a subsequent paragraph.

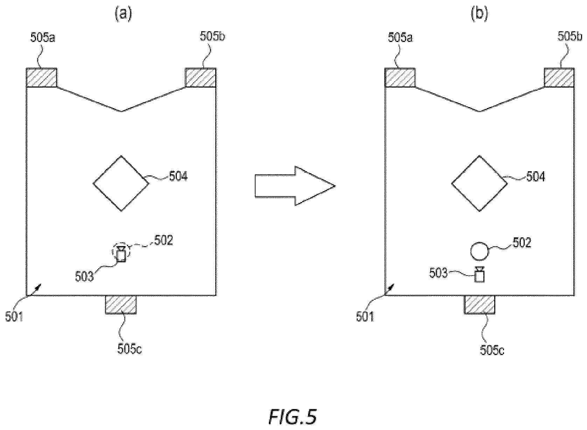

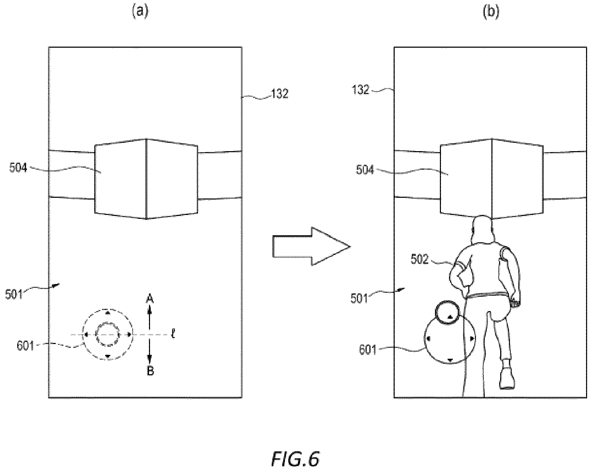

Hereinafter, the virtual space and the virtual space image generated in the series of processing illustrated in Fig. 4 will be described with reference to Figs. 5 and 6. Fig. 5 is a schematic diagram illustrating an example of a virtual space 501 according to an embodiment. In Figs. 5(a) and 5(b), a user object 502, a virtual camera 503, a column object 504, and link regions 505a to 505c are provided in the virtual space 501.

The user object 502 is an object operable by the user, and is, for example, an avatar of the user. The virtual camera 503 is a virtual object which images the virtual space 501. The column object 504 is a virtual object fixedly arranged in the virtual space 501. The link regions 505a to 505c are regions linked with another virtual space. The user can move the user object to other virtual spaces by moving the user object to the link regions 505a to 505c.

Fig. 5(a) illustrates a case where the virtual space image is generated from the first-person viewpoint. That is, Fig. 5(a) is an example of a case where the movement operation is not being performed. In Fig. 5(a), the virtual camera 503 is at the viewpoint position of the user object 502. In addition, the user object 502 is indicated by a broken line, which indicates that the user object 502 is transparent.

Fig. 5(b) illustrates a case where the virtual space image is generated from the third-person viewpoint. That is, Fig. 5(b) is an example of a case where the movement operation is being performed. In Fig. 5(b), the virtual camera 503 is positioned away from the user object 502. In addition, the user object 502 is indicated by a solid line, which indicates that the user object 502 is non-transparent.

Fig. 6 is a schematic diagram illustrating an example of a display screen according to an embodiment. Specifically, Fig. 6(a) illustrates a display screen when the virtual space 501 is in the state of Fig. 5(a). Fig. 6(b) illustrates a display screen when the virtual space 501 is in the state of Fig. 5(b).

In Fig. 6(a), the virtual space image when the virtual space 501 is viewed from the first-person viewpoint is displayed on display 132. In Fig. 6(a), the user object 502 is transparent and thus is not displayed.

In addition, in Fig. 6(a), an operator 601 is indicated by a broken line. The operator 601 is a virtual controller displayed to receive the input of the movement operation for moving the user object 502. For example, the user can move the user object 502 in a dragged direction by dragging a circular portion at the center of the operator 601. The operator 601 is an example, and another shape or input mode may be adopted. From a perspective of enhancing the visibility of the virtual space 501, it is preferable that the operator 601 is in a completely transparent state or a visible but highly transparent state until receiving the movement operation of the user.

In the following description, the "direction in which the virtual camera faces" or the "far-side direction" refers to a direction indicated by an arrow A in Fig. 6(a). In addition, the movement operation in the "direction in which the virtual camera faces" or the "far-side direction" means that the circular portion is dragged to a region positioned (on an arrow A direction side) above a line segment I which divides the operator 601 into two in a vertical direction. In addition, the "opposite direction to the direction in which the virtual camera faces" or the "near-side direction" refers to a direction indicated by an arrow B in Fig. 6(a). In addition, the movement operation in the "opposite direction to the direction in which the virtual camera faces" or the "near-side direction" means that the circular portion is dragged to a region positioned (on an arrow B direction side) below the line segment I which divides the operator 601 into two in the vertical direction.

In Fig. 6(b), the virtual space image when the virtual space 501 is viewed from the third-person viewpoint is displayed on the display 132. In Fig. 6(b), substantially the entire body of the user object 502 is displayed in the non-transparent state. In one aspect, the user object 502 may be displayed in the translucent state, or at least a part thereof may be displayed in the transparent state.

In Fig. 6(b), since the movement operation in the far-side direction is being performed, the user object 502 moves in the far-side direction. In addition, the circular portion of the operator 601 is positioned in the far-side direction to indicate that the movement operation in the far-side direction is being performed. In addition, in response to the movement operation being performed, the operator 601 is set to have lower transparency than the case of Fig. 6(a). During the movement operation, the operator 601 may be non-transparent, but is preferably translucent or transparent from the perspective of enhancing the visibility of the virtual space 501.

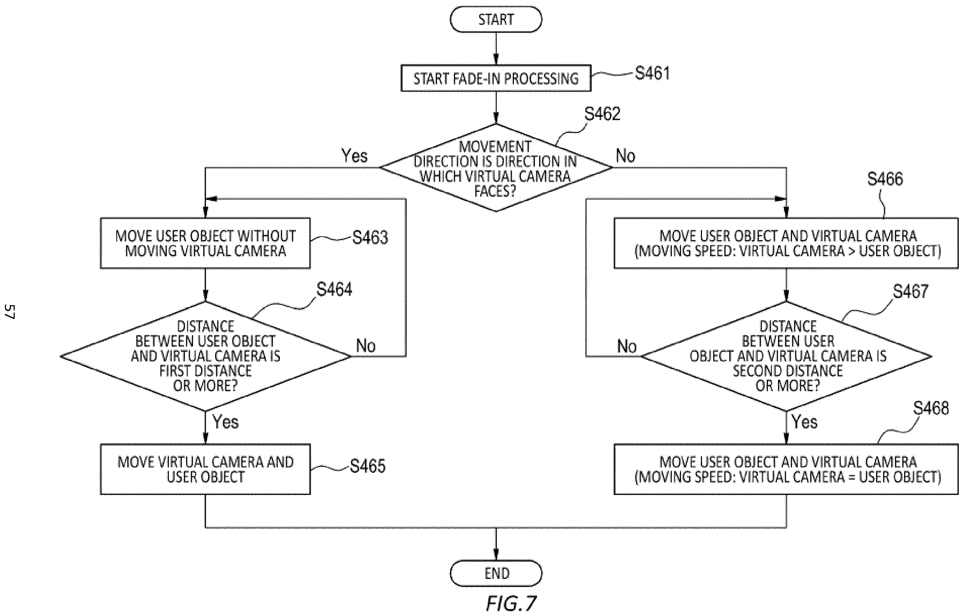

Hereinafter, the change processing to the third-person viewpoint in step S460 in Fig. 4 will be described in detail with reference to Fig. 7. In step S461, the control unit 190 starts fade-in processing of the user object 502. By the fade-in processing, the transparency of the user object 502 is lowered continuously or stepwise. The fade-in processing is completed within, for example, about one second after the start of the movement operation. The fade-in processing is executed, for example, in parallel with a series of processing of steps 463 to 465 or steps 466 to 468 described later, and is preferably started and ended at the same timing as the series of processing. Note that the fade-in processing may be omitted, and the viewpoint may be instantaneously switched from the first-person viewpoint to the third-person viewpoint.

When the movement operation detected in step S450 of Fig. 4 is a movement operation in the far-side direction (Yes in step S462), the process proceeds to step S463. In step S463, the control unit 190 moves the user object 502 without moving the virtual camera 503. The direction in which the user object 502 moves is the far-side direction specified by the movement operation.

When a distance between the user object 502 and the virtual camera 503 is less than the predetermined first distance (No in step S464), the processing of step S463 is continued.

When the distance between the user object 502 and the virtual camera 503 is the predetermined first distance or more (Yes in step S464), in step S465, the control unit 190 moves the virtual camera 503 together with the user object 502. In step S465, for example, the virtual camera 503 is moved in conjunction with (following) the movement of the user object 502.

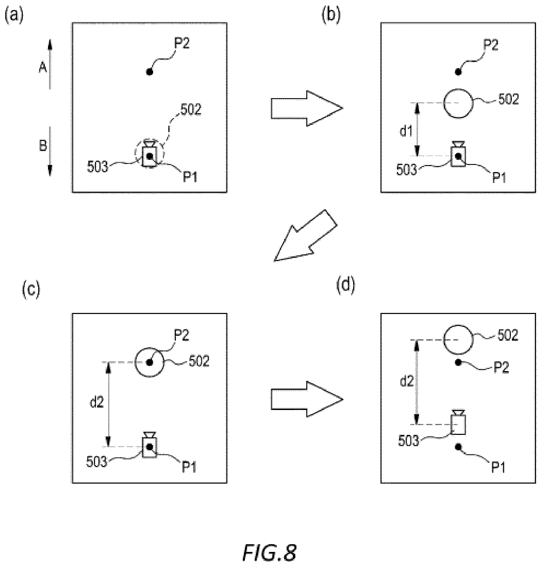

Here, the processing of steps S463 to S465 will be described in detail with reference to Fig. 8. Fig. 8 is a schematic diagram illustrating a positional relationship between the user object 502 and the virtual camera 503 according to an embodiment. Specifically, Fig. 8 illustrates a change in the positional relationship between the user object 502 and the virtual camera 503 when the movement operation in the far-side direction is performed.

Fig. 8(a) illustrates a state immediately before the movement operation is performed. In Fig. 8(a), the user object 502 and the virtual camera 503 exist at a point P1. In addition, the user object 502 is in a transparent state and thus is indicated by a dotted line. Note that similarly to Fig. 6, the direction of the arrow A in Fig. 8(a) is the far-side direction, and the direction of the arrow B in Fig. 8(a) is the near-side direction.

Fig. 8(b) illustrates a state where a distance d1 between the user object 502 and the virtual camera 503 is less than the first distance after the processing in step S463. In Fig. 8(b), the user object 502 moves in the far-side direction based on the movement operation. On the other hand, the virtual camera 503 does not move and is still at the point P1.

The fade-in processing is started, and the user object 502 is in a state where the transparency is lower than that in the state of Fig. 8(a). Therefore, in Fig. 8(b), the user object 502 is indicated by a solid line.

Fig. 8(c) illustrates a state where a distance d2 between the user object 502 and the virtual camera 503 reaches the first distance. In Fig. 8(c), the user object 502 reaches a point P2. On the other hand, the virtual camera 503 does not move and is still at the point P1. Note that at this point, the fade-in processing is preferably completed.

Fig. 8(d) illustrates a state where the distance d2 between the user object 502 and the virtual camera 503 reaches the first distance, and the processing of step S465 is performed. In Fig. 8(d), the user object 502 moves in the far-side direction from the point P2. In addition, the virtual camera 503 moves in the far-side direction from the point P1. As long as the movement operation is continued, the virtual camera 503 moves in conjunction with the movement of the user object 502 while maintaining the distance d2.

The contents described with reference to Fig. 8 may be applied to a case where the movement operation is performed not in the far-side direction. That is, the processing of steps S463 to 465 may be executed regardless of the direction of the movement operation. In such a configuration, when the movement operation is performed not in the far-side direction, in step S463, it is preferable to move the virtual camera 503 and not to move the user object 502.

The description returns to Fig. 7. When the movement operation detected in step S450 of Fig. 4 is not a movement operation in the far-side direction (No in step S462), the process proceeds to step S466. The case of No in step S462 is a case where the movement operation in the near-side direction is performed, and may include a case where the movement operation in a complete right-left direction (the direction on the line segment I illustrated in Fig. 6) is performed.

In step S466, the control unit 190 moves both the user object 502 and the virtual camera 503. In step S466, the moving speed of the virtual camera 503 is larger than the moving speed of the user object 502. In addition, the direction in which the user object 502 moves is the direction specified by the movement operation. The direction in which the virtual camera 503 moves is, for example, a direction obtained by combining a directly downward direction (a direction orthogonal to the line segment I illustrated in Fig. 6) with the direction specified by the movement operation.

When the distance between the user object 502 and the virtual camera 503 is less than the predetermined second distance (No in step S467), the processing of step S466 is continued.

Then, when the distance between the user object 502 and the virtual camera 503 is the predetermined second distance or more (Yes in step S467), in step S468, the control unit 190 moves the user object 502 and the virtual camera 503 in the same moving direction at the same moving speed. In step S468, for example, the virtual camera 503 is moved in conjunction with (following) the movement of the user object 502. With the processing of step S465 or step S468, the change processing to the third-person viewpoint is ended, and the process proceeds to step S470 of Fig. 4.

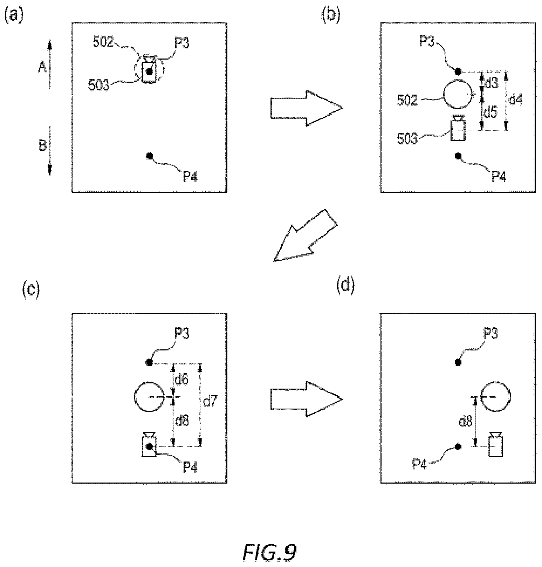

Here, the processing of steps S466 to S468 will be described in detail with reference to Fig. 9. Fig. 9 is a schematic diagram illustrating the positional relationship between the user object 502 and the virtual camera 503 according to an embodiment. Specifically, Fig. 9 illustrates a change in the positional relationship between the user object 502 and the virtual camera 503 when the movement operation in a direction other than the far-side direction is performed.

Fig. 9(a) illustrates a state immediately before the movement operation is performed. In Fig. 9(a), the user object 502 and the virtual camera 503 exist at a point P3. Note that similarly to Fig. 6, the direction of the arrow A in Fig. 9(a) is the far-side direction, and the direction of the arrow B in Fig. 9(a) is the near-side direction. In addition, the fade-in processing is omitted since the contents described in Fig. 8 can be cited.

Fig. 9(b) illustrates a state where a distance d4 between the user object 502 and the virtual camera 503 is less than the second distance after the processing in step S466. In Fig. 9(b), the user object 502 and the virtual camera 503 move in the near-side direction based on the movement operation. Note that in the example of Fig. 9, the direction of the movement operation is the directly downward direction.

In the state of Fig. 9(b), the moving speed of the virtual camera 503 is larger than the moving speed of the user object 502. Thus, a movement distance d5 of the virtual camera 503 is larger than a movement distance d3 of the user object 502.

Fig. 9(c) illustrates a state where a distance d8 between the user object 502 and the virtual camera 503 reaches the second distance. In Fig. 9(c), the virtual camera 503 reaches a point P4, and the user object 502 does not reach the point P4. That is, also at this stage, a movement distance d7 of the virtual camera 503 is larger than a movement distance d6 of the user object 502.

Fig. 9(d) illustrates a state where the distance d8 between the user object 502 and the virtual camera 503 reaches the second distance and the processing in step S468 is performed. In Fig. 9(d), since the direction of the movement operation has been changed to the right direction, the user object 502 and the virtual camera 503 move to the right of the point P4.

As described above, even if the direction of the movement operation is changed, as long as the movement operation is continued, the virtual camera 503 moves at the same moving speed in conjunction with the movement of the user object 502 while maintaining the distance d8. The same applies to step S465.

The contents described with reference to Fig. 9 may be applied to a case where the movement operation is performed in the far-side direction. That is, the processing of steps S466 to 468 may be executed regardless of the direction of the movement operation. In the case of such a configuration, when the movement operation is performed in the far-side direction, in step S466, the moving speed of the virtual camera 503 is preferably made smaller than the moving speed of the user object 502.

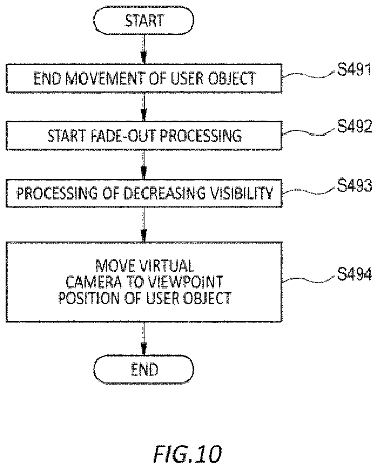

Hereinafter, the change processing to the first-person viewpoint in step S490 of Fig. 4 will be described in detail with reference to Fig. 10. In step S491, the control unit 190 ends the movement of the user object 502. In addition, in step S492, the control unit 190 starts fade-out processing of the user object 502.

By the fade-out processing, the transparency of the user object 502 is increased continuously or stepwise. The fade-out processing is completed within, for example, about one second after the end of the movement operation. The fade-out processing is executed, for example, in parallel with processing of steps S491, S493, and S494 to be described later, and is preferably started and ended at the same timing as at least a part of the processing. Note that the fade-out processing may be omitted, and the viewpoint may be instantaneously switched from the third-person viewpoint to the first-person viewpoint.

In step S493, the control unit 190 executes, for example, black processing or blur processing as the processing of decreasing the visibility of the user. Note that processing similar to that in step S493 may be executed in the change processing to the third-person viewpoint in step S460.

In step S494, the control unit 190 moves the virtual camera 503 to the viewpoint position of the user object 502. From a perspective of reducing discomfort caused to the user, it is preferable that the movement of the virtual camera 503 is performed at the same moving speed as the moving speed of the user object 502 immediately before the end of the movement operation.

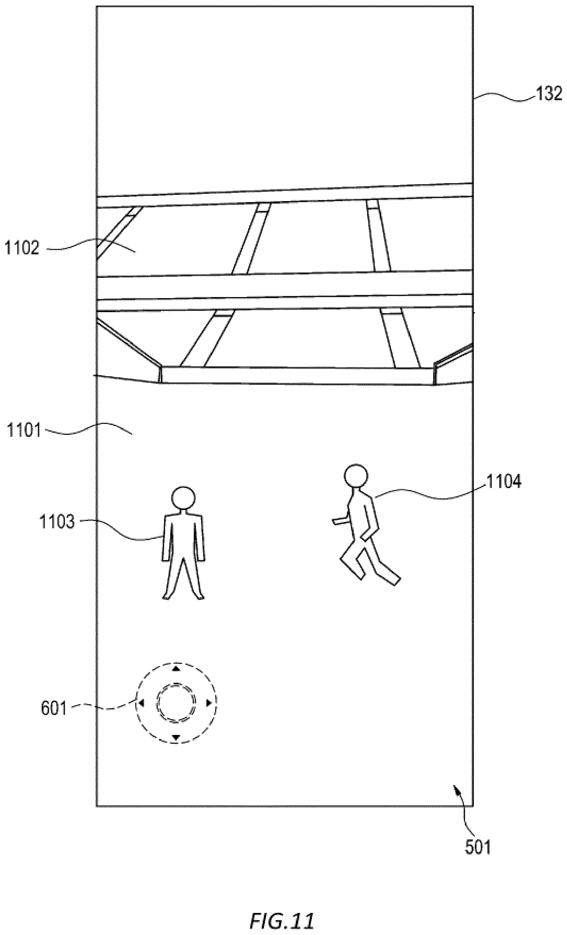

Here, a case where another user object operated by another user exists in the virtual space will be described with reference to Fig. 11. Fig. 11 is a schematic diagram illustrating an example of a display screen according to an embodiment. In the example of Fig. 11, the virtual space 501 is a space imitating a concert venue. Fig. 11 is, for example, a virtual space image when a guest seat side is viewed from the stage direction of the concert venue.

The virtual space image displayed on the display 132 includes an arena region 1101, a guest seat object 1102, and other user objects 1103 and 1104. The arena region 1101 is a region in which a plurality of user objects can interact with each other. The guest seat object 1102 is a virtual object fixedly arranged in the virtual space 501.

The other user objects 1103 and 1104 operated by other users are displayed on the display 132 of the user who operates the user object 502 regardless of the presence or absence of the movement operation by the other users. For example, the other user object 1103 is stopped and not moving, but is displayed on the display 132. Note that the other user object 1103 is not displayed on the display of the user who operates the other user object 1103.

Here, in Fig. 11, the virtual space image generated from the first-person viewpoint is displayed. That is, no movement operation is input to the operator 601 displayed on the display 132, and the user object 502 is in the transparent state. However, on the display of another user, the user object 502 is not transparent but is displayed.

The other user object 1104 is an object which is moving. When the user of the other user object 1104 performs an operation for performing movement or another action on the other user object 1104, information for specifying the position of the other user object 1104 after the movement and the other action is transmitted to the user terminal 10 of the user of the user object 502 via the server 20. Based on the information, the control unit 190 controls the movement or action of the other user object 1104 in the virtual space 501.

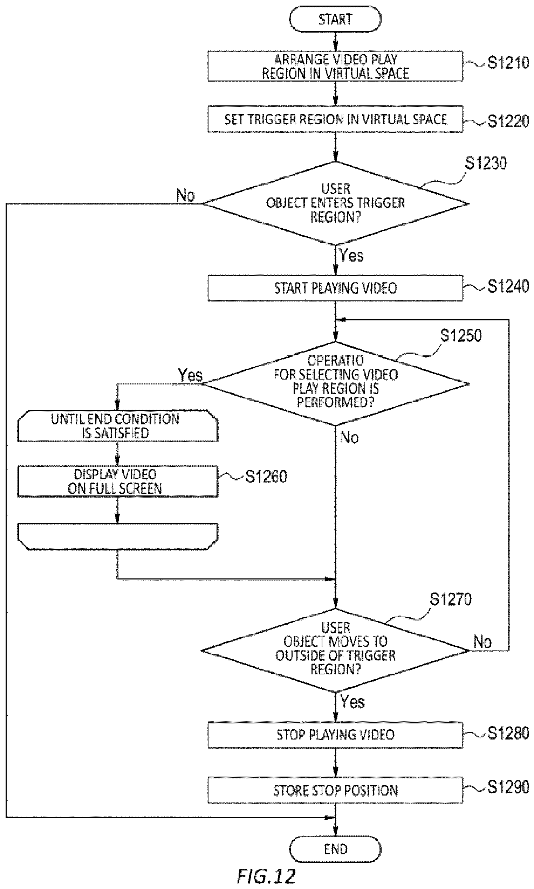

Hereinafter, processing regarding video play when a video play region for playing a video is provided in the virtual space 501 will be described. Fig. 12 is a flowchart illustrating an example of processing regarding the video play according to an embodiment.

First, in step S1210, the control unit 190 arranges the video play region (for example, a screen object) in the virtual space 501. In addition, in step S1220, the control unit 190 sets a trigger region in the virtual space 501. The trigger region is preferably set in the vicinity of the video play region.

When the user object 502 does not enter the trigger region (No in step S1230), a series of processing is ended in response to reception of the input operation for ending the program 151, or the like.

When the movement operation causes the user object 502 to enter the trigger region (Yes in step S1230), in step S1240, the control unit 190 starts playing the video in the video play region. The play format of the video may be a streaming format in which the video information is acquired from the server 20 each time, or a download format in which the video information is downloaded in advance in the storage unit 150. The play of the video is preferably performed with an audio output.

It is preferable that the play of the video in the video play region in which the trigger region is set is not synchronized with other users. That is, when the user object 502 does not enter a trigger region, it is preferable not to start playing the video in the video play region corresponding to the trigger region even if another user object of another user enters the trigger region. Note that, in this case, the video is played on the display 132 of the other user.

Some videos may be played in synchronization with other users. The some videos are not particularly limited, but are, for example, contents (for example, sports games or the like) which are performed, broadcast, or distributed in real time. With such a configuration, it is possible to enjoy the videos with a sense of unity with other users.

When a selection operation (for example, a tap operation or a double tap operation) for selecting the video play region is performed (Yes in step S1250), in step S1260, the control unit 190 causes the video played in the selected video play region to be displayed on the full screen. The processing in step S1250 is continued until an end condition such as an operation for ending the full-screen display is satisfied. When the end condition is satisfied, the process returns to the play in the video play region.

When the selection operation for selecting the video play region is not performed (No in step S1250), the play in the video play region is continued. In addition, in a state where the user object 502 does not move to the outside of the trigger region (No in step S1270), the play in the video play region is continued.

When the user object 502 moves to the outside of the trigger region (Yes in step S1270), in step S1280, the control unit 190 stops playing the video in the video play region. In addition, in step S1290, the control unit 190 stores a stop position at which the play in the video is stopped. When the user object 502 enters the trigger region again, the play of the video may be started from where the play left off last time, with reference to the stored stop position.

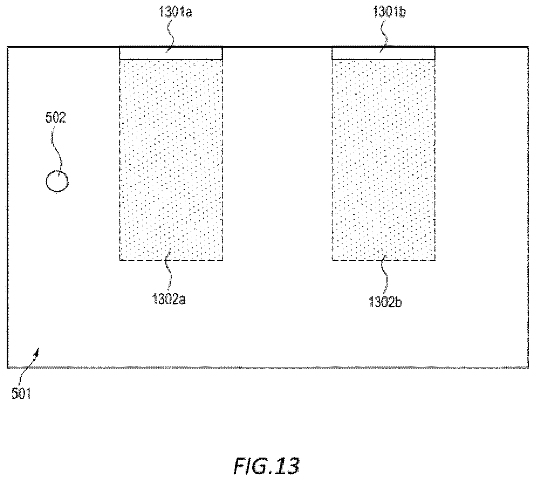

Hereinafter, the processing regarding the video play will be described in detail with reference to Figs. 13 to 15.

Fig. 13 is a schematic diagram illustrating an example of the virtual space 501 according to an embodiment. In the example of Fig. 13, the user object 502 and screen objects 1301a and 1301b are arranged in the virtual space 501, and trigger regions 1302a and 1302b are set.

The screen objects 1301a and 1301b are examples of the video play region, and are, for example, virtual objects imitating the shape of a screen. The videos played in the screen objects 1301a and 1301b are different from each other.

The trigger region 1302a is a region corresponding to the screen object 1301a, and the trigger region 1302b is a region corresponding to the screen object 1301b. For example, when the user object 502 enters the trigger region 1302a, the play of the video is started in the screen object 1301a.

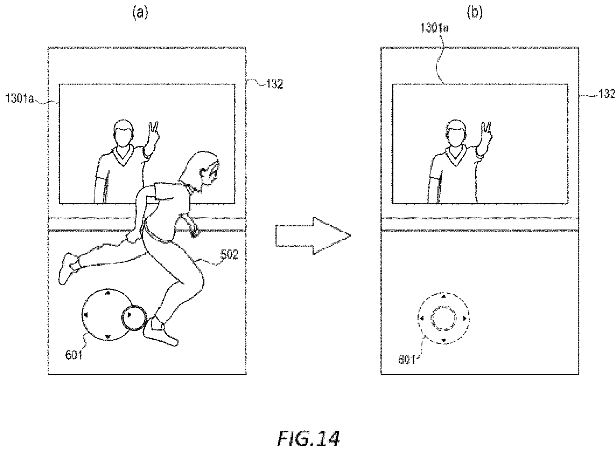

Fig. 14 is a schematic diagram illustrating an example of the display screen according to an embodiment. Fig. 14(a) is a diagram illustrating a state where the user object 502 is moving in the trigger region 1302a. Based on the user object 502 being positioned in the trigger region 1302a, the video is played in the screen object 1301a. Note that, in Fig. 14(a), since the movement operation is being performed, the virtual space image displayed on the display 132 is based on the third-person viewpoint.

Fig. 14(b) is a diagram illustrating a state where the user object 502 is stopped in the trigger region 1302a. Based on the user object 502 being positioned in the trigger region 1302a, the video continues to be played the screen object 1301a. In addition, in Fig. 14(b), since the movement operation is not being performed, the virtual space image displayed on the display 132 is changed to one based on the first-person viewpoint, and the user object 502 is hidden.

In the state of Fig. 14(a), a part of the screen object 1301a is hidden by the user object 502 and cannot be visually recognized, but by changing to the first-person viewpoint as in Fig. 14(b), the user can visually recognize the whole of the screen object 1301a.

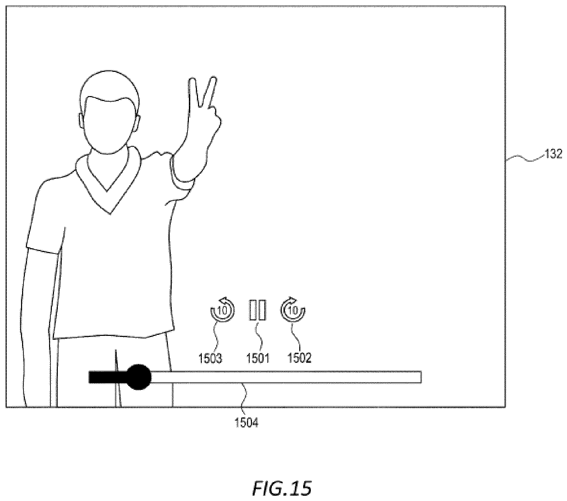

Fig. 15 is a schematic diagram illustrating an example of the display screen when the video according to an embodiment is displayed on the full screen. Fig. 15 illustrates an example of a case where a tap operation is performed on the screen object 1301a in the state illustrated in Fig. 14(b), for example.

In the example of Fig. 15, on the display 132, the video played by the screen object 1301a in the state of Fig. 14(b) is displayed on the full screen. In addition, a pause button 1501, a fast-forward button 1502, a rewind button 1503, and a seek bar 1504 are displayed at the bottom of the display 132. These buttons are examples of the operation user interface (UI) of the video. It is preferable that these operation Uls become transparent over a certain period of time. In the example of Fig. 15, when the full screen display is performed, the orientation of the display 132 is changed from portrait orientation to landscape orientation, but the full screen display may be performed while maintaining the portrait orientation. When the end condition of the full-screen display is satisfied in the state of Fig. 15, for example, the state returns to the state illustrated in Fig. 14(b).

Although each embodiment according to the present disclosure has been described in detail above, the control unit 290 may be in charge of a part of the processing executed by the control unit 190 in the description of each embodiment, or the control unit 190 may be in charge of at least a part of the processing executed by the control unit 290 as long as the operation of the program is not hindered.

For example, the program may be a program which realizes a so-called cloud type system in which the control unit 290 executes the generation of the virtual space or the virtual object and the generation of the virtual space image. In addition, a so-called stand-alone program may be used without the server 20. In addition, a configuration may be made in which a plurality of user objects are able to exist in the same virtual space by performing P2P communication between user terminals without the server 20.

In addition, the above embodiments are merely examples for facilitating understanding of the present invention, and are not intended to limit and interpret the present invention. The present invention can be modified and improved without departing from the gist thereof, and it goes without saying that the present invention includes equivalents thereof.

### (Additional Remarks)

The contents of the present disclosure are listed as follows.

### (Item 1)

A program that is executed by a first computer including a processor and a memory, the program causing the processor to perform operations including:
generating a virtual space;
arranging a virtual camera and a user object in the virtual space;
generating, based on the virtual camera, a virtual space image, the virtual space image being an image obtained by capturing an image of inside of the virtual space from the virtual camera; and
moving the user object in the virtual space based on a movement operation for moving the user object having been performed, wherein
in the generating of the virtual space image,
when the movement operation is not being performed, a position of the virtual camera is controlled such that the virtual space image is an image from a first-person viewpoint of the user object, and
when the movement operation is being performed, the position of the virtual camera is controlled such that the virtual space image is an image from a third-person viewpoint including at least a part of the user object.

Accordingly, it is possible to prevent visually-induced motion sickness and to suppress a feeling of immersion in the virtual space and a decrease in visibility in the virtual space. Specifically, when the user object moves, the viewpoint is the third-person viewpoint in which the user object is displayed, so that the visually-induced motion sickness is less likely to occur than in the case of the first-person viewpoint. In addition, when the user object is not moving, the viewpoint is the first-person viewpoint, so that the feeling of immersion in the virtual space is improved, and the visibility in the virtual space is improved as compared with the case of the third-person viewpoint. In addition, since the switching between the first-person viewpoint and the third-person viewpoint is automatically performed based on the presence or absence of the movement operation, the convenience of the user is improved.

### (Item 2)

The program according to item 1, wherein
when the movement operation is not being performed, in the generating of the virtual space image, the virtual space image is generated, with at least a part of the user object being hidden.

Accordingly, it is possible to improve the visibility of the user in the first-person viewpoint. In addition, by making the whole of the user object transparent, it is possible to suppress display that the inside of the user object is displayed by the virtual camera, which cannot be made in reality.

### (Item 3)

The program according to item 1 or 2, wherein
when a movement operation of moving the user object in a direction in which the virtual camera faces has been started, in the generating of the virtual space image,
until a distance between the user object and the virtual camera reaches a predetermined first distance, the virtual space image is generated through moving the user object and not moving the virtual camera, and
after the distance between the user object and the virtual camera reaches the predetermined first distance, the virtual space image is generated through moving the virtual camera in conjunction with movement of the user object.

Accordingly, it is possible to prevent the user from feeling discomfort in the case of changing from the first-person viewpoint to the third-person viewpoint.

### (Item 4)

The program according to any one of items 1 to 3, wherein
when a movement operation of moving the user object in an opposite direction to a direction in which the virtual camera faces has been started, in the generating of the virtual space image,
until a distance between the user object and the virtual camera reaches a predetermined second distance, the virtual space image is generated through moving the user object and moving, toward the opposite direction, the virtual camera at a moving speed faster than a moving speed of the user object, and
after the distance between the user object and the virtual camera reaches the predetermined second distance, the virtual space image is generated through moving the user object based on the movement operation and moving the virtual camera at a same moving speed as the moving speed of the user object in conjunction with movement of the user object.

Accordingly, it is possible to prevent the user from feeling discomfort in the case of changing from the first-person viewpoint to the third-person viewpoint.

### (Item 5)

The program according to any one of items 1 to 4, wherein
in the generating of the virtual space image,
in order to generate the virtual space image, fade-in processing from a transparent state to a non-transparent state is performed on the user object until a predetermined time has elapsed since start of movement of the user object, and, in order to generate the virtual space image, fade-out processing from the non-transparent state to the transparent state is performed on the user object until a predetermined time has elapsed since end of the movement of the user object.

Accordingly, it is possible to prevent the user from feeling discomfort before and after the viewpoint change.

### (Item 6)

The program according to any one of items 1 to 5, wherein
in the generating of the virtual space image, processing of decreasing visibility of the virtual space image is executed until a predetermined time has elapsed since at least one of start or end of the movement operation.

Accordingly, it is possible to prevent the user from feeling discomfort before and after the viewpoint change. In addition, it is possible to further suppress visually-induced motion sickness.

### (Item 7)

The program according to any one of items 1 to 6, wherein
the arranging further includes arranging a video play region in the virtual space,
a trigger region for starting playing a video in the video play region is set in the virtual space, and
the program further causes the processor to perform:
   playing the video in the video play region when the user object is positioned in the trigger region.

Accordingly, the video can be automatically played when the user object is positioned in the trigger region, and the video can be automatically stopped when the user object is outside the trigger region, and thus, the convenience of the user can be improved as a result. In addition, it is recognized that the video can be viewed in the virtual space, and it is easy to determine whether or not the video is an interesting video. For example, in a case where the 360 degree space is developed, when there is no video play region at the viewpoint in a traveling direction, it is difficult to notice the video. Therefore, by automatically playing the video, particularly, with accompanying audio, it is possible to cause the user to further recognize that the video can be viewed, and the program of item 7 assumes, as a premise, the first-person viewpoint when the movement operation is not being performed, so that the visibility of the video can be improved.

### (Item 8)

The program according to item 7, wherein
when an operation of selecting the video play region is performed, the video is played in full screen display in the playing.

Accordingly, the visibility of the video can be further improved. In addition, operability at the time of viewing the video can be improved. Even if the operation UI is arranged in the video play region, the selection of the operation UI becomes difficult depending on an angle at which the virtual camera faces and a distance to the video play region, but by performing full screen display, these problems can be solved, and the operability at the time of viewing the video can be improved.

### (Item 9)

The program according to any one of items 1 to 8, wherein
the first computer is capable of being connected to communicate with a second computer, and the program further causes the processor to perform:
receiving, from the second computer, other user object information regarding another user object operated by another user different from a user of the first computer, and
the arranging further includes arranging the another user object in the virtual space based on the other user object information.

Accordingly, it is possible to realize interaction with other users. In addition, since the program of the item 9 assumes, as a premise, the first-person viewpoint when the movement operation is not being performed, it is possible to improve a feeling of immersion at the time of interaction with another user and visibility of another user object. In addition, since the program of the item 9 assumes, as a premise, the third-person viewpoint when the movement operation is being performed, it is easy to grasp a positional relationship between the own user object and the other user object, and as a result, it is easy to move the own user object to a desired position.

### (Item 10)

A method that is executed by a computer including a processor and a memory, the method including causing the processor to perform operations, the operations including:
generating a virtual space;
arranging a virtual camera and a user object in the virtual space;
generating, based on the virtual camera, a virtual space image, the virtual space image being an image obtained by capturing an image of inside of the virtual space from the virtual camera; and
moving the user object in the virtual space based on a movement operation for moving the user object having been performed, wherein
in the generating of the virtual space image,
when the movement operation is not being performed, a position of the virtual camera is controlled such that the virtual space image is an image from a first-person viewpoint of the user object, and
when the movement operation is being performed, the position of the virtual camera is controlled such that the virtual space image is an image from a third-person viewpoint including at least a part of the user object.

Accordingly, it is possible to prevent visually-induced motion sickness and to suppress a feeling of immersion in the virtual space and a decrease in visibility in the virtual space.

### (Item 11)

An information processing apparatus including a processor and a memory, wherein
the processor is for:
generating a virtual space;
arranging a virtual camera and a user object in the virtual space;
generating, based on the virtual camera, a virtual space image, the virtual space image being an image obtained by capturing an image of inside of the virtual space from the virtual camera; and
moving the user object in the virtual space based on a movement operation for moving the user object having been performed, and
in the generating of the virtual space image,
when the movement operation is not being performed, a position of the virtual camera is controlled such that the virtual space image is an image from a first-person viewpoint of the user object, and
when the movement operation is being performed, the position of the virtual camera is controlled such that the virtual space image is an image from a third-person viewpoint including at least a part of the user object. Accordingly, it is possible to prevent visually-induced motion sickness and to suppress a feeling of immersion in the virtual space and a decrease in visibility in the virtual space.

### EXPLANATION OF REFERENCES

1: game distribution system; 10: user terminal; 20: server; 30: network; 130: touch screen; 150: storage unit (of user terminal); 190: control unit (of user terminal); 250: storage unit (of server); and 290: control unit (of server).

## Claims

1. A program that is executed by a first computer including a processor and a memory, the program causing the processor to perform operations comprising:
generating a virtual space;
arranging a virtual camera and a user object in the virtual space;
generating, based on the virtual camera, a virtual space image, the virtual space image being an image obtained by capturing an image of inside of the virtual space from the virtual camera; and
moving the user object in the virtual space based on a movement operation for moving the user object having been performed, wherein
in the generating of the virtual space image,
when the movement operation is not being performed, a position of the virtual camera is controlled such that the virtual space image is an image from a first-person viewpoint of the user object, and
when the movement operation is being performed, the position of the virtual camera is controlled such that the virtual space image is an image from a third-person viewpoint including at least a part of the user object.

2. The program according to claim 1, wherein
when the movement operation is not being performed, in the generating of the virtual space image, the virtual space image is generated, with at least a part of the user object being hidden.

3. The program according to claim 1 or 2, wherein
when a movement operation of moving the user object in a direction in which the virtual camera faces has been started, in the generating of the virtual space image,
until a distance between the user object and the virtual camera reaches a predetermined first distance, the virtual space image is generated through moving the user object and not moving the virtual camera, and
after the distance between the user object and the virtual camera reaches the predetermined first distance, the virtual space image is generated through moving the virtual camera in conjunction with movement of the user object.

4. The program according to any of claims 1 to 3, wherein
when a movement operation of moving the user object in an opposite direction to a direction in which the virtual camera faces has been started, in the generating of the virtual space image,
until a distance between the user object and the virtual camera reaches a predetermined second distance, the virtual space image is generated through moving the user object and moving, toward the opposite direction, the virtual camera at a moving speed faster than a moving speed of the user object, and
after the distance between the user object and the virtual camera reaches the predetermined second distance, the virtual space image is generated through moving the user object based on the movement operation and moving the virtual camera at a same moving speed as the moving speed of the user object in conjunction with movement of the user object.

5. The program according to any of claims 1 to 4, wherein
in the generating of the virtual space image,
in order to generate the virtual space image, fade-in processing from a transparent state to a non-transparent state is performed on the user object until a predetermined time has elapsed since start of movement of the user object, and, in order to generate the virtual space image, fade-out processing from the non-transparent state to the transparent state is performed on the user object until a predetermined time has elapsed since end of the movement of the user object.

6. The program according to any of claims 1 to 5, wherein
in the generating of the virtual space image, processing of decreasing visibility of the virtual space image is executed until a predetermined time has elapsed since at least one of start or end of the movement operation.

7. The program according to any of claims 1 to 6, wherein
the arranging further includes arranging a video play region in the virtual space,
a trigger region for starting playing a video in the video play region is set in the virtual space, and
the program further causes the processor to perform:
playing the video in the video play region when the user object is positioned in the trigger region.

8. The program according to claim 7, wherein
when an operation of selecting the video play region is performed, the video is played in full screen display in the playing.

9. The program according to any of claims 1 to 8, wherein
the first computer is capable of being connected to communicate with a second computer, and the program further causes the processor to perform:
receiving, from the second computer, other user object information regarding another user object operated by another user different from a user of the first computer, and
the arranging further includes arranging the another user object in the virtual space based on the other user object information.

10. A method that is executed by a computer including a processor and a memory, the method comprising causing the processor to perform operations, the operations comprising:
generating a virtual space;
arranging a virtual camera and a user object in the virtual space;
generating, based on the virtual camera, a virtual space image, the virtual space image being an image obtained by capturing an image of inside of the virtual space from the virtual camera; and
moving the user object in the virtual space based on a movement operation for moving the user object having been performed, wherein
in the generating of the virtual space image,
when the movement operation is not being performed, a position of the virtual camera is controlled such that the virtual space image is an image from a first-person viewpoint of the user object, and
when the movement operation is being performed, the position of the virtual camera is controlled such that the virtual space image is an image from a third-person viewpoint including at least a part of the user object.

11. An information processing apparatus comprising a processor and a memory, wherein
the processor is for:
generating a virtual space;
arranging a virtual camera and a user object in the virtual space;
generating, based on the virtual camera, a virtual space image, the virtual space image being an image obtained by capturing an image of inside of the virtual space from the virtual camera; and
moving the user object in the virtual space based on a movement operation for moving the user object having been performed, and
in the generating of the virtual space image,
when the movement operation is not being performed, a position of the virtual camera is controlled such that the virtual space image is an image from a first-person viewpoint of the user object, and
when the movement operation is being performed, the position of the virtual camera is controlled such that the virtual space image is an image from a third-person viewpoint including at least a part of the user object.
